# EUROPÄISCHE PATENTSCHRIFT

(11) **EP 0 940 087 B1**
(45) Veröffentlichungstag und Bekanntmachung des Hinweises auf die Patenterteilung: **18.12.2002**
(21) Anmeldenummer: 99102873.9
(22) Anmeldetag: 03.03.1999
(51) Int. Cl.: A23G 1/18, A23G 7/02

(54) **Anlage zur Herstellung von Schokoladenartikeln mit mehreren Kühlabschnitten**
Device for manufacturing chocolate articles with multiple cooling sections
Dispositif pour la fabrication des produits de chocolat avec plusieurs sections frigorifiques

(30) Priorität: 06.03.1998 DE 19809652
(43) Veröffentlichungstag der Anmeldung: 08.09.1999
(73) Patentinhaber: Bühler Bindler GmbH, 51702 Bergneustadt (DE)
(72) Erfinder: Bindler, Uwe, 51702 Bergneustadt (DE)
(74) Vertreter: Frommhold, Joachim, Dr.

(56) Entgegenhaltungen:
- EP-A- 1 011 345
- DE-A1- 3 444 060
- DE-A1- 4 035 392
- US-A- 3 777 807
- US-A- 5 025 638

## Beschreibung

Die Erfindung betrifft eine Anlage zur Herstellung von Schokoladenartikeln mit mindestens einem Kühlabschnitt.

Herkömmliche Anlagen zur Schokoladenherstellung weisen neben einer Mehrzahl von anderen Abschnitten u.a. stets auch einen oder mehrere Kühlabschnitte auf. Diese Kühlabschnitte dienen zur Kühlung der Schokolade bzw. der Schokoladenfüllung. Bei den aus dem Stand der Technik bekannten Anlagen zur Schokoladenherstellung weist jeder Kühlabschnitt ein Kühlaggregat, bestehend aus Kühlregister, Ventilator und eventuell einer dazugehörigen Kältemittelaufbereitungsanlage, auf. Diese traditionelle Zuordnung eines Kühlaggregates zu einem Kühlabschnitt ist unter verschiedenen Gesichtspunkten problematisch. So kann mit den einzelnen Kühlaggregaten häufig nicht gewährleistet werden, daß die Kühlluft hinreichend trocken und kalt ist, da sonst der bei einem Kühlaggregat zu betreibende Aufwand den möglichen Kostenrahmen sprengt. Eine zu hohe Feuchtigkeit in der Kühlluft führt wiederum dazu, daß die Bauteile innerhalb des Kühlabschnittes schneller korrodieren oder daß sich ungewollt Herde von Mikroorganismen bilden. Problematisch ist bei den bekannten, jeweils einem Kühlabschnitt zugeordneten Kühlaggregaten weiter, daß bei diesen eine aufwendige Temperaturregelung der kalten Luft notwendig ist. Die Temperaturregelung erfolgt bei den bekannten Kühlaggregaten in der Regel über eine Temperaturmessung der Luft vor dem Wärmetauscher. Eine derartige Temperaturregelung läßt nur eine mittlere Einstellgenauigkeit der Temperatur der Kaltluft zu. Schließlich besteht ein Problem der bekannten Kühlaggregate darin, daß der mit ihrer Hilfe in dem Kühlabschnitt erzeugte Druckunterschied das Einströmen von ungekühlter Falschluft durch Leckagen in den Kühlabschnitt bewirkt. Auch hierdurch sinkt die Wirkung der Kühlaggregate.

Die DE-4 035 392 A1 offenbart eine Vorrichtung zur Herstellung von hohlen Formkörpern, aus einer bei Erwärmung fliessfähigen Masse, insbesondere Schokolade, mit einer Transportbahn, auf der die mit fleissfähiger Masse befüllbaren Formen von einer Eingangsstation durch eine Kühlstation zu einer Ausgangsstation transportierbar sind. Die Schokoladenmasse enthaltenden Formen sind in Haltern untergebracht, die wiederum stapelbar sind. Die gestapelten Halter sind um eine vertikale Achse drehbar. Weiterhin ist vorgesehen, dass entlang des Stapels gekühlte Luft geblasen werden kann. Da dies zu einer "seriellen" Kühlung der gestapelten Halter und der in ihnen enthaltenden mit Schokolade gefüllten Formen führt, ist keine einheitliche Kühlbehandlung der Formen in den gestapelten Haltern gewährleistet.

Ausgehend von den zuvor beschriebenen Problemen liegt der Erfindung die Aufgabe zugrunde, eine Anlage zur Herstellung von Schokoladenartikeln zur Verfügung zu stellen, bei der eine deutlich verbesserte Kühlung der Kühlabschnitte gewährleistet ist.

Die zuvor hergeleitete und aufgezeigte Aufgabe ist erfindungsgemäß dadurch gelöst, daß der Kaltlufteinlaß eines Kühlabschnittes an einen Kaltluftkanal eines zentralen Kühlsystems angeschlossen ist. Dadurch, daß ein zentrales Kühlsystem statt dezentraler Kühlaggregate vorgesehen ist, ist es bei insgesamt nicht erhöhtem Kostenaufwand möglich, ein unter Herstellungsgesichtspunkten optimal arbeitendes zentrales Kühlsystem vorzusehen.

Ist der Kaltluftkanal des zentralen Kühlsystems an eine Mehrzahl von Kühlabschnitten parallel angeschlossen, so ist ohne weiteres gewährleistet, daß jeder Kühlabschnitt optimal mit Kaltluft versorgt wird.

Bei den bekannten, herkömmlichen Anlagen zur Herstellung von Schokoladenartikeln existiert kein geschlossener Kreislauf für die Kühlluft. Eine vorteilhafte Wiederverwertung der Abluft erfolgt gemäß einer weiteren Ausgestaltung der Erfindung dadurch, daß der Abluftauslaß eines Kühlabschnittes an den Zuluftkanal des zentralen Kühlsystems angeschlossen ist. Hierdurch ergibt sich ein geschlossener Kreislauf für die zur Kühlung dienende Luft.

Um zu gewährleisten, daß die Kühlabschnitte einer erfindungsgemäß ausgestalteten Anlage zur Herstellung von Schokoladenartikeln stets mit Kaltluft gleichbleibender Qualität versorgt werden, ist es vorteilhaft, das zentrale Kühlsystem mit einem Zuluftaufbereiter zu versehen.

Einen wesentlichen Bestandteil eines soeben beschriebenen Zuluftaufbereiters sollte dabei ein zum zentralen Kühlsystem gehörender Luftentfeuchter bilden. Mit einem solchen Luftentfeuchter läßt sich die Luftfeuchte erheblich reduzieren, was zu einem besseren Kühlergebnis, geringeren Transportverlusten beim Transport der Kaltluft und zu einer Reduktion der Korrosion und der Hygieneprobleme innerhalb der Kühlabschnitte führt.

Eine weitere Verbesserung des Kühlergebnisses läßt sich dadurch erzielen, daß das zentrale Kühlsystem einen Kaltlufttemperaturregler aufweist. Mit einem derartigen Kaltlufttemperaturregler läßt sich gewährleisten, daß die den Kühlabschnitten zugeführte Kaltluft stets eine gewünschte, in der Regel gleichbleibende Temperatur hat.

Eine Reduktion des Einflusses von über Leckagen der Kühlabschnitte eintretender Falschluft wird über einen erhöhten Druck im Kaltluftsystem gewährleistet. Hierzu weist das zentrale Kühlsystem einen den Luftdruck im Kaltluftkanal erhöhenden Verdichter auf. Es genügt bereits ein geringer Überdruck, um das Einströmen von Falschluft über Leckagen so stark zu reduzieren, daß der Einfluß zu vernachlässigen ist.

Schließlich läßt sich der Kühlbedarf der einzelnen Kühlabschnitte dadurch individuell einstellen, daß der Kaltlufteinlaß eines Kühlabschnittes mit dem Kaltluftkanal über eine einstellbare Drosselstelle verbunden ist. Jede Drosselstelle kann hierbei derart eingestellt werden, daß eine gewünschte Menge von Kaltluft in den zugehörigen Kühlabschnitt eintritt.

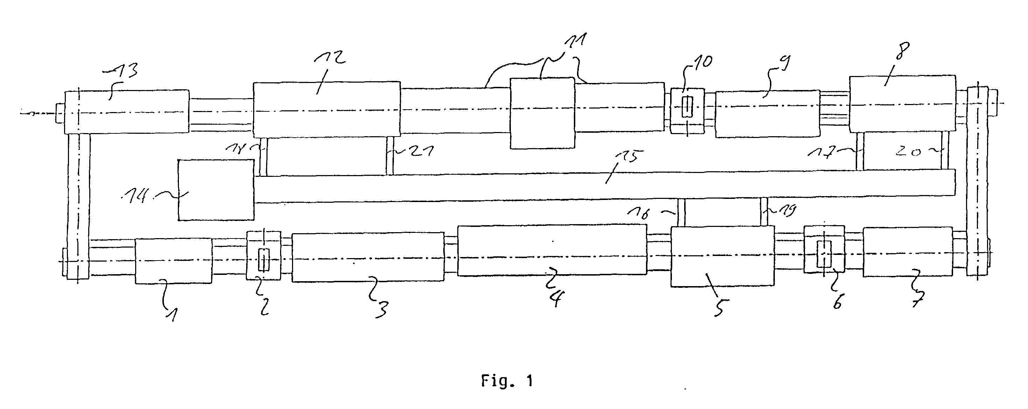

Es gibt nun eine Vielzahl von Möglichkeiten, die erfindungsgemäß ausgestaltete Anlage zur Herstellung von Schokoladenartikeln auszugestalten und weiterzubilden. Hierzu wird verwiesen einerseits auf die dem Patentanspruch 1 nachgeordneten Patentansprüche und andererseits auf die Beschreibung eines Ausführungsbeispiels in Verbindung mit der Zeichnung. In der Zeichnung zeigt die einzige Figur ein Ausführungsbeispiel einer erfindungsgemäß ausgestalteten Anlage zur Herstellung von Schokoladenartikeln.

In der einzigen Figur der Zeichnung ist ein Ausführungsbeispiel einer Anlage zur Herstellung von Schokoladenartikeln mit einem Anwärmabschnitt 1 zur Anwärmung der leeren Formen für die Schokoladenartikel, einem Dosierabschnitt 2 zur Dosierung der Schokoladenmasse in die Formen, einem Rüttelabschnitt 3 zur Homogenisierung der Schokoladenmasse, einem Hülsenbildungsabschnitt 4 zur Hülsenbildung innerhalb der Schokoladenmasse, einem Hülsenkühlabschnitt 5 zur Zwischenkühlung der vorgeformten Hülsen, einem Füllungsdosierabschnitt 6 zur Dosierung der Füllungen in die Hülsen der Schokoladenartikel und einem Füllungsrüttelabschnitt 7 zur Homogenisierung der Füllungen dargestellt. Die beschriebenen Abschnitte sind bei dem in der einzigen Figur dargestellten Ausführungsbeispiel entlang einer ersten Strecke angeordnet. Parallel zu dieser ersten Strecke verläuft in Gegenrichtung eine zweite Strecke mit einem Füllungskühlabschnitt 8 zur Zwischenkühlung der Füllungen der Schokoladenartikel, einem Heizfeld 9, einem Deckeldosierabschnitt 10 und einem daran anschließenden Abdeckelungsabschnitt 11 zur Herstellung eines Deckels über der in die Hülsen eingebrachten Füllung der Schokoladenartikel. Am Ende der zweiten Strecke ist schließlich ein Endkühlabschnitt 12 zur abschließenden Kühlung der Schokoladenartikel und ein Ausformabschnitt 13 zum Herauslösen der Schokoladenartikel aus den Formen vorgesehen. Von dem Ausformabschnitt 13 werden die leeren Formen wieder zum Anwärmabschnitt 1 transportiert, wodurch der Kreislauf des Herstellungsvorgangs geschlossen wird.

Erfindungsgemäß werden die Kühlabschnitte der dargestellten Anlage zur Herstellung von Schokoladenartikeln, nämlich der Hülsenkühlabschnitt 5, der Füllungskühlabschnitt 8 und der Endkühlabschnitt 12 von einem zentral angeordneten Kühlsystem 14 mit Kaltluft versorgt. Das zentrale Kühlsystem 14 ist mit den einzelnen Kühlabschnitten 5, 8, 12 über einen zentralen Kalt- und Zuluftkanal 15 verbunden. Dieser Kalt- und Zuluftkanal 15 ist selbstverständlich in einen separaten Kaltluftkanal und einen separaten Zuluftkanal unterteilt. Dies ist in der einzigen Figur nicht ausdrücklich dargestellt. Ausdrücklich dargestellt ist hingegen, daß der Kaltlufteinlaß 16 des Hülsenkühlabschnittes 5, der Kaltlufteinlaß 17 des Füllungskühlabschnittes 8 und der Kaltlufteinlaß 18 des Endkühlabschnittes 12 an den Kaltluftkanal des Kalt- und Zuluftkanals 15 des zentralen Kühlabschnittes 14 angeschlossen sind. Gleichfalls sind der Abluftauslaß 19 des Hülsenkühlabschnittes 5, der Abluftauslaß 20 des Füllungskühlabschnittes 8 und der Abluftauslaß 21 des Endkühlabschnittes 12 an den Zuluftkanal des Kalt- und Zuluftkanals 15 des zentralen Kühlsystems 14 angeschlossen.

Im einzelnen nicht dargestellt ist, daß das erfindungsgemäß vorgesehene zentrale Kühlsystem 14 einen Abluftbereiter mit einem Luftentfeuchter, einen Kaltlufttemperaturregler und einen Verdichter aufweist. Gleichfalls nicht dargestellt ist, daß in den Kaltlufteinlässen 16, 17, 18 jeweils eine Drosselstelle zur Dosierung der den einzelnen Kühlabschnitten 5, 8, 12 zugeführten Kaltluft angeordnet ist.

## Patentansprüche

1. Anlage zur Herstellung von Schokoladeartikeln mit einer Mehrzahl von Kühlabschnitten (5, 8, 12) und einer Mehrzahl von anderen Abschnitten (1, 2, 3, 4, 6, 7, 9, 10, 11, 13), wobei jeweils ein Kaltlufteinlass (16, 17, 18) der Kühlabschnitte (5, 8, 12) an einen Kaltluftkanal eines zentralen Kühlsystems (14) angeschlossen ist, **dadurch gekennzeichnet, dass** der Kaltluftkanal an die Mehrzahl von Kühlabschnitten (5, 8, 12) parallel angeschlossen ist.

2. Anlage nach Anspruch 1, **dadurch gekennzeichnet, dass** der Abluftauslass (19, 20, 21) eines Kühlabschnittes (5, 8, 12) an den Zuluftkanal des zentralen Kühlsystems (14) angeschlossen ist.

3. Anlage nach einem Anspruch 1 bis 2, **dadurch gekennzeichnet, dass** das zentrale Kühlsystem (14) einen Zuluftaufbereiter aufweist.

4. Anlage nach Anspruch 3, **dadurch gekennzeichnet, dass** das zentrale Kühlsystem (14) einen Luftentfeuchter aufweist.

5. Anlage nach einem Anspruch 1 bis 4, **dadurch gekennzeichnet, dass** das zentrale Kühlsystem (14) einen Kaltlufttemperaturregler aufweist.

6. Anlage nach einem der Ansprüche 1 bis 5, **dadurch gekennzeichnet, dass** das zentrale Kühlsystem (14) einen den Luftdruck im Kaltluftkanal erhöhenden Verdichter aufweist.

7. Anlage nach einem Anspruch 1 bis 6, **dadurch gekennzeichnet, dass** der Kaltlufteinlass (16, 17, 18) eines Kühlabschnittes (5, 8, 12) mit dem Kaltluftkanal über eine einstellbare Drosselstelle verbunden ist.

## Claims

1. A device for manufacturing chocolate articles having a plurality of cooling sections (5, 8, 12) and a plurality of other sections (1, 2, 3, 4, 6, 7, 9, 10, 11, 13), wherein a cooling air inlet (16, 17, 18) from the respective cooling sections (5, 8, 12) is connected to a cooling air duct of a central cooling system (14), **characterised in that** the cooling air duct is connected in parallel to the plurality of cooling sections (5, 8, 12).

2. The device according to claim 1, **characterised in that** outgoing air outlet (19, 20, 21) of a cooling section (5, 8, 12) is connected to the inlet air duct of the central cooling system (14).

3. The device according to claim 1 or 2, **characterised in that** the central cooling system (14) is equipped with an air conditioner.

4. The device according to claim 3, **characterised in that** the central cooling system (14) is equipped with an air dehumidifier.

5. The device according to any of claims 1 to 4, **characterised in that** the central cooling system (14) is equipped with a cooling air thermostat.

6. The device according to any of claims 1 to 5, **characterised in that** the central cooling system (14) is equipped with a compressor for raising the air pressure in the cooing air duct.

7. The device according to any of claims 1 to 6, **characterised in that** the cooling air inlet (16, 17, 18) from a cooling section (5, 8, 12) is connected to the cooling air duct via an adjustable choke point.

## Revendications

1. Dispositif pour la fabrication de produits de chocolat avec une multitude de sections frigorifiques (5, 8, 12) et une multitude d'autres sections (1, 2, 3, 4, 6, 7, 9, 10, 11, 13), respectivement une entrée d'air froid (16, 17, 18) des sections frigorifiques (5, 8, 12) étant raccordée à un canal d'air froid d'un système frigorifique central (14), **caractérisé en ce que** le canal d'air froid est raccordé parallèlement à la multitude de sections frigorifiques (5, 8, 12).

2. Dispositif selon la revendication 1, **caractérisé en ce que** la sortie d'air d'évacuation (19, 20, 21) d'une section frigorifique (5, 8, 12) est raccordée au canal d'air d'alimentation du système frigorifique central (14).

3. Dispositif selon une des revendications 1 à 2, **caractérisé en ce que** le système frigorifique central (14) présente un traiteur d'air d'alimentation.

4. Dispositif selon la revendication 3, **caractérisé en ce que** le système frigorifique central (14) présente un déshumidificateur d'air.

5. Dispositif selon une des revendications 1 à 4, **caractérisé en ce que** le système frigorifique central (14) présente un régulateur de température d'air froid.

6. Dispositif selon une des revendications 1 à 5, **caractérisé en ce que** le système frigorifique central (14) présente un compresseur augmentant la pression d'air dans le canal d'air froid.

7. Dispositif selon une des revendications 1 à 6, **caractérisé en ce que** l'entrée d'air froid (16, 17, 18) d'une section frigorifique (5, 8, 12) est reliée au canal d'air froid par l'intermédiaire d'un point d'étranglement réglable.
